# EUROPÄISCHE PATENTANMELDUNG

(11) **EP 1 248 186 A2**
(43) Veröffentlichungstag der Anmeldung: **09.10.2002**
(21) Anmeldenummer: 02000542.7
(22) Anmeldetag: 09.01.2002
(51) Int. Cl.: G06F 7/50

(54) **Carry-ripple Addierer**

(30) Priorität: 05.04.2001 DE 10117041
(71) Anmelder: Infineon Technologies AG, 81669 München (DE)
(72) Erfinder: Hatsch, Joel, 81735 München (DE); Kamp, Winfried, 81739 München (DE); Köppe, Siegmar, 30880 Laatzen (DE); Künemund, Ronald, 83623 Dietramszell (DE); Lackerschmid, Eva, 81739 München (DE); Söldner, Heinz, 83052 Bruckmühl-Heufeldmühle (DE)
(74) Vertreter: Lange, Thomas, Dr.

(57) **Zusammenfassung**

Ein Carry-Ripple Addierer umfaßt 5 erste Eingänge (i0, i1, i2 i3, i4) zur Entgegennahme von 5 zu summierenden Eingabe-Bits gleicher Wertigkeit w und 2 zweite Eingänge (ci0, ci1) zur Entgegennahme von zwei Übertrags-Bits der Wertigkeit w. Ferner umfaßt er einen Ausgang (s) für ein Summen-Bit der Wertigkeit w und zwei Ausgänge (c1, c2) für zwei Übertrags-Bits der Wertigkeiten 2w und 4w.

## Beschreibung

Die Erfindung betrifft einen Carry-Ripple Addierer sowie einen übertragsbeschleunigten Addierer zum Summieren einer Mehrzahl von Bit-Sätzen, wobei die in einem Bit-Satz enthaltenen Bits dieselbe Wertigkeit und Bits unterschiedlicher Bit-Sätze unterschiedliche Wertigkeiten aufweisen, und wobei jedem Bit-Satz ein Bit-Satz-Addierer zugeordnet ist, welcher unter Berücksichtigung von bei der Summation von Bit-Sätzen niedrigerer Wertigkeit gewonnenen Überträgen ein Bit der Wertigkeit des jeweiligen Bit-Satzes berechnet.

Carry-Ripple (CR) Addierer sind in der Technik auch als Addierer mit paralleler Übertragslogik bekannt. Vergleichbar einem Carry-Save (CS) Addierer weisen sie mehrere Eingänge gleicher Wertigkeit auf, und summieren im Betrieb die an diesen Eingängen anliegenden Bits. Die Summe der Bits wird an Ausgängen unterschiedlicher Wertigkeit, d.h. in z.B. dualkodierter Zahlendarstellung ausgegeben.

Ein wesentlicher Gesichtspunkt von CR Addierern besteht darin, daß ihre Eingänge - anders als bei CS Addierern - nicht gleichberechtigt im Sinne von beliebig vertauschbar sind. Dies wird im folgenden am Beispiel des bekannten 3-zu-2 CR Addierers (im folgenden zur Unterscheidung der nicht gleichberechtigten Eingänge als "2und1-zu-2 CR Addierer" bezeichnet) erläutert.

Der 2und1-zu-2 CR Addierer umfaßt zwei erste Eingänge zur Entgegennahme von jeweils einem Eingabe-Bit und einen dritten Eingang, an welchem ein Übertrags-Bit anliegt, welches von einem 2und1-zu-2 CR Addierer ausgegeben wird, welcher Bits der nächst kleineren Wertigkeit addiert. Der 2und1-zu-2 CR Addierer weist zwei Ausgänge auf, wobei einer der Ausgänge ein Summen-Bit der Wertigkeit der Eingabe-Bits dieses Addierers ausgibt, während es sich bei dem anderen Ausgang um einen Übertrags-Ausgang handelt, an welchem das erwähnte Übertrags-Bit für den 2und1-zu-2 CR Addierer zum Summieren von Bits der nächst höheren Wertigkeit ausgegeben wird.

Somit ergibt sich bei CR Addierern stets die Notwendigkeit, daß ein Übertrags-Bit bei der Berechnung des Summen-Bits zu berücksichtigen ist, welches aber zuvor in dem CR Addierer der nächst niedrigeren Wertigkeit erst noch berechnet werden muß. Um zu vermeiden, daß dabei ein zeitintensiver Berechnungsvorgang entsteht, ist bei CR Addierern durch einen geeigneten internen Schaltungs- bzw. Gatteraufbau dafür gesorgt, daß das Übertrags-Bit mit möglichst wenigen Gattern im kritischen Pfad zwischen dem Übertrags-Eingang ("carry in") und dem Übertrags-Ausgang ("carry out") aus den Eingangs-Bits berechnet werden kann. Auf diese Weise wird der Gesamt-Übertragspfad ("Carry-Pfad") optimiert, da er aus möglichst wenigen Gattern besteht.

Der 2und1-zu-2 CR Addierer kann lediglich zwei Bits addieren. Für die Addition von drei oder mehr Dualzahlen muß eine entsprechend höhere Anzahl von Bits pro Stelle addiert werden. Üblicherweise wird zur Addition von mehr als zwei Bits gleicher Wertigkeit ein Wallace-Tree-(WT-)Addierer eingesetzt. Ein WT-Addierer ist ein mehrstufiger Addierer, welcher in jeder Stufe die Anzahl der zu addierenden Bits verkleinert. Die einzelnen Stufen eines WT-Addierers sind aus parallel zueinander angeordneten 3-zu-2 CS Volladdierern aufgebaut. Mit jeder Stufe verringert sich die Anzahl der benötigten CS Volladdierer. Sobald die Anzahl der zu summierenden Bits auf den Wert 2 reduziert ist, wird als letzte und abschließende Stufe der bereits erwähnte 2und1-zu-2 CR Addierer eingesetzt.

Der Erfindung liegt die Aufgabe zugrunde, einen CR Addierer zu schaffen, der mit Vorteil in einer Vielzahl von Addiererkonfigurationen einsetzbar ist. Insbesondere soll er einen Addierer zum Summieren einer Mehrzahl von Bit-Sätzen ermöglichen, welcher für die Summation eines Bit-Satzes mit wenig Stufen auskommt und eine hohe Addiergeschwindigkeit erlaubt.

Die der Erfindung zugrunde liegende Aufgabenstellung wird durch die Merkmale des Anspruchs 1 gelöst.

Ein wesentlicher Vorteil des erfindungsgemäßen 5und2-zu-3 CR Addierers mit zwei Übertrags-Eingängen und zwei Übertrags-Ausgängen besteht darin, daß die volle Darstellungsmöglichkeit der drei Ausgangssignale für die Addition von der insgesamt sieben Eingangs-Bits (d.h. der fünf Eingabe-Bits an den ersten Eingängen und der zwei Übertrags-Bits an den zweiten Eingängen) genutzt wird. Dadurch wird wie beim 2und1-zu-2 CR Addierer die ideale Ausschöpfung des bei drei Ausgängen prinzipiell möglichen Wertebereichs erreicht. Darüber hinaus ist durch die gleichzeitige Erzeugung von zwei Überträgen unterschiedlicher Wertigkeit der Schaltungsaufwand und der interne Verdrahtungsaufwand geringer als bei der mehrstufigen Lösung mit herkömmlichen 3-zu-2 Carry Save und 2und1-zu-2 CR Addierern.

Dadurch, daß der erfindungsgemäße CR Addierer fünf erste Eingänge zur Entgegennahme von fünf zu summierenden Eingabe-Bits gleicher Wertigkeit w aufweist, wird ferner erreicht, daß zur Addition von maximal fünf Dualzahlen allein erfindungsgemäße CR Addierer (jeweils ein erfindungsgemäßer 5und2-zu-3 CR Addierer pro Stelle) eingesetzt werden können. In diesem Fall werden keinerlei CS Addierer zur Kompression der Eingangs-Bits für jede Stelle benötigt.

Eine besonders bevorzugte Ausführungsform des erfindungsgemäßen 5und2-zu-3 CR Addierers kennzeichnet sich dadurch, daß die maximale Anzahl von Gattern zwischen einem beliebigen ersten Eingang und einem beliebigen der Ausgänge für die Übertrags-Bits 5 beträgt.

Ferner ist bevorzugt, daß beim erfindungsgemäßen 5und2-zu-3 CR Addierer die maximale Anzahl von Gattern zwischen einem beliebigen zweiten Eingang (Übertrags-Eingang) und einem beliebigen der Ausgänge für die Übertrags-Bits 2 beträgt. Dadurch wird eine Optimierung des kritischen Pfads des erfindungsgemäßen CR-Addierers erreicht.

Der erfindungsgemäße 5und2-zu-3 CR Addierer kann in vielfältiger Weise in größeren Addiererstrukturen eingesetzt werden. In zahlreichen Anwendungsfällen werden Addierer benötigt, die eine Mehrzahl von Bit-Sätzen verarbeiten, wobei die in einem Bit-Satz enthaltenen Bits dieselbe Wertigkeit und Bits unterschiedlicher Sätze unterschiedliche Wertigkeiten aufweisen. Ein erfindungsgemäßer übertragsbeschleunigter Addierer dieser Art kennzeichnet sich dadurch, daß zumindest einer der Bit-Satz-Addierer einen erfindungsgemäßen CR Addierer als Ausgangsstufe aufweist.

Sofern sämtliche Bit-Sätze maximal fünf Bits enthalten, d.h. mit anderen Worten, maximal fünf Dualzahlen durch den übertragsbeschleunigten Addierer zu addieren sind, kennzeichnet sich eine vorteilhafte Ausführungsform des übertragsbeschleunigten Addierers dadurch, daß sämtliche Bit-Satz-Addierer jeweils einstufig in Form von erfindungsgemäßen 5und2-zu-3 CR Addierern realisiert sind, und daß der Ausgang für das niederwertigere der zwei Übertrags-Bits einem zweiten Eingang des 5und2-zu-3 CR Addierers für die nächst höhere Wertigkeit zugeführt ist, und der Ausgang für das höherwertigere der zwei Übertrags-Bits einem zweiten Eingang des 5und2-zu-3 CR Addierers für die übernächst höhere Wertigkeit zugeführt ist.

Ein bevorzugter übertragsbeschleunigter Addierer, der auch für die Addition von mehr als fünf Dualzahlen geeignet ist, kennzeichnet sich dadurch, daß zumindest einem Bit-Satz ein mehrstufiger Bit-Satz-Addierer zugeordnet ist, und daß die ausgangsseitige Stufe dieses Bit-Satz-Addierers ein erfindungsgemäßer 5und2-zu-3 CR Addierer ist. In diesem Fall müssen die eingangsseitigen Addiererstufen eine Verringerung der Anzahl der zu addierenden Bits lediglich auf einen Wert von 5 leisten, wodurch verglichen zum Stand der Technik, bei dem ausgangsseitig ein 2und1-zu-2 CR Addierer eingesetzt wird, eine wesentlich geringere Anzahl von Stufen benötigt wird.

Eine besonders bevorzugte Ausführungsform eines solchen übertragsbeschleunigten Addierers kennzeichnet sich dadurch, daß bis auf die ausgangsseitige Stufe die Stufen des Bit-Satz-Addierers aus parallel zueinander angeordneten CS Addierern mit mehreren Ausgängen für Übertrags-Bits, insbesondere 7-zu-3 CS Volladdierern, bestehen. Dadurch wird das beim 5und2-zu-3 CR Addierer verwendete Prinzip auf die CS Kompressionsstufen ausgedehnt, d.h. aufgrund der generellen Bereitstellung von 2 Übertrags-Bits in jeder Stufe wird innerhalb einer jeden Stufe eine inhärente Parallelisierung des Summationsvorgangs und damit eine Minimierung des Verdrahtungsaufwands und der Stufenanzahl erreicht. Dies wirkt sich sowohl auf die Geschwindigkeit als auch auf den für die Gesamtschaltung benötigten Platzbedarf günstig aus.

Weitere vorteilhafte Ausgestaltungen der Erfindung sind in den Unteransprüchen angegeben.

Die Erfindung wird nachfolgend anhand von Ausführungsbeispielen unter Bezugnahme auf die Zeichnung beschrieben; in dieser zeigt:
- Fig. 1: einen Addiererbaum gemäß dem Stand der Technik, welcher aus 3-zu-2 CS Addierern aufgebaut ist und welcher ausgangsseitig mit einem 2und1-zu-2 CR Addierer versehen ist;
- Fig. 2: ein Stufendiagramm zur Erläuterung des Stufenaufbaus eines bekannten Addiererbaums zum Aufaddieren von 49 Bits derselben Wertigkeit;

- Fig. 3: eine schematische Darstellung eines erfindungsgemäßen 5und2-zu-3 CR Addierers;
- Fig. 4: eine Wahrheitstabelle für einen 5und2-zu-3 CR Ad - dierer;
- Fig. 5: ein Blockschaltbild eines ersten Schaltungsabschnitts eines erfindungsgemäßen 5und2-zu-3 CR Addierers;
- Fig. 6: ein Blockschaltbild eines sich an den in Fig. 5 dargestellten ersten Abschnitt anschließenden zweiten Schaltungsabschnitts des erfindungsgemäßen 5und2-zu-3 CR Addierers;
- Fig. 7: ein Blockschaltbild zur Erläuterung eines erfindungsgemäßen übertragsbeschleunigten Addierers für 5 Binärzahlen;
- Fig. 8: ein Stufendiagramm zur Erläuterung des Stufenaufbaus eines erfindungsgemäßen Bit-Satz-Addierers zum Aufaddieren von 49 Bits derselben Wertigkeit mit einem ausgangsseitig vorgesehenen 5und2-zu-3 CR Addierer;
- Fig. 9: ein Stufendiagramm zur Erläuterung des Stufenaufbaus eines erfindungsgemäßen Bit-Satz-Addierers zum Aufaddieren von 49 Bits derselben Wertigkeit, der ausschließlich aus 7-zu-3 CS Addierern und einem ausgangsseitigen 5und2-zu-3 CR Addierer aufgebaut ist;
- Fig. 10: eine schematische Darstellung einer Realisierung eines 7-zu-3 CS Addierers; und

- Fig. 11: einen Ausschnitt aus einem erfindungsgemäßen übertragsbeschleunigten Addierer, der aus 7-zu-3 Addierern aufgebaut ist.

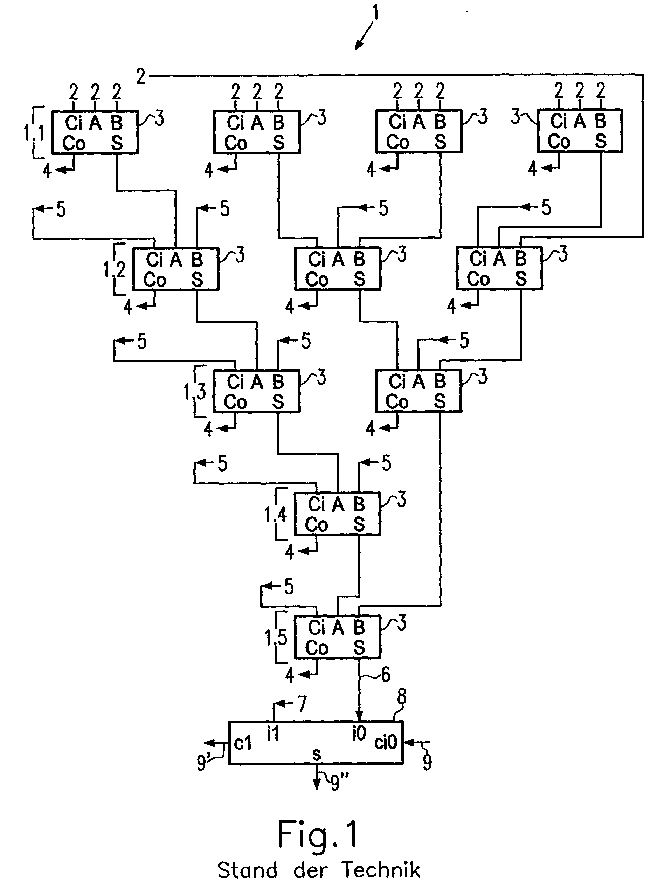

Fig. 1 zeigt einen Addiererbaum bestehend aus einem fünfstufigen WT-Addierer 1 mit einem dem WT-Addierer 1 nachgeschalteten 2und1-zu-2 CR Addierer zur Addition von 13 Eingabe-Bits 2 gleicher Wertigkeit nach dem Stand der Technik.

Der WT-Addierer 1 umfaßt insgesamt 11 3-zu-2 CS Volladdierer 3. Jeder CS Volladdierer 3 weist drei Eingänge A, B, Ci und zwei Ausgänge S, Co auf. Die Eingänge A und B sind zur Entgegennahme von zwei zu addierenden Bits vorgesehen, der Eingang Ci (Carry in) ist zum Empfang eines Übertrags-Bits vorgesehen. Die drei Eingänge A, B, Ci sind äquivalent.

Der Ausgang S repräsentiert den Summen-Ausgang des 3-zu-2 CS Volladdieres 3. Der Ausgang S nimmt den Wert Null an, wenn an sämtlichen Eingängen A, B, Ci ein Bit des Wertes Null anliegt oder wenn an genau zwei der Eingänge A, B, Ci ein Bit des Wertes 1 anliegt. Andernfalls ist S = 1. Der Ausgang Co für den Übertrag (Carry out) nimmt nur dann den Wert 1 an, wenn an mindestens zwei der Eingänge ein Bit des Wertes 1 anliegt. Im Gegensatz zu den Eingängen A, B, Ci sind die Ausgänge S und Co nicht äquivalent, d.h. nicht vertauschbar.

Die fünf Stufen 1.1, 1.2, 1.3, 1.4, 1.5 des WT-Addierers 1 umfassen 4, 3, 2, 1 bzw. 1 CS Volladdierer 3. Die 13 Eingänge des WT-Addierers sind durch die 12 Eingänge 2 der ersten Stufe 1.1 und einen Eingang 2 der zweiten Stufe 1.2 realisiert.

Während die Ausgänge S der ersten Stufe 1.1 jeweils Eingängen der CS Volladdierer 3 der zweiten Stufe 1.2 zugeführt werden, werden die 4 Ausgänge Co, welche ein Übertrags-Bit 4 bereitstellen, einer zweiten Stufe eines (nicht dargestellten) WT-Addierers zur Addition eines Bit-Satzes mit einer nächst höheren Wertigkeit zugeleitet. In analoger Weise empfangen die Volladdierer 3 der zweiten Stufe 1.2 jeweils ein oder zwei Übertrags-Bits 5, welche von einer ersten Stufe eines (nicht dargestellten) WT-Addierers für einen Bit-Satz mit nächst niedrigerer Wertigkeit ausgegeben werden.

Dieses Prinzip setzt sich über die zweite 1.2 und dritte 1.3, dritte 1.3 und vierte 1.4 und vierte 1.4 und fünfte 1.5 Stufe des WT-Addierers 1 fort. Der Ausgang des WT-Addierers wird durch ein Summen-Bit 6 und ein partielles Übertrags-Bit 7, welches von der fünften Stufe des WT-Addierers 1 nächst niedrigerer Wertigkeit stammt, repräsentiert. Diese beiden Bits bilden die Eingänge i0, i1 eines dem WT-Addierer 1 nachgeschalteten, 2und1-zu-2 CR Addierers 8, der an seinem Summenausgang s das Summenbit 9'' für den betrachteten Bit-Satz liefert. Der 2und1-zu-2 CR Addierer 8 empfängt zu diesem Zweck an einem Eingang ci0 ein Übertrags-Bit 9, das von einem CR Addierer für die Berechnung des Summen-Bits der nächst niedrigeren Wertigkeit ausgegeben wird, und gibt an seinem Übertrags-Ausgang c1 entsprechend ein Übertrags-Bit 9' aus.

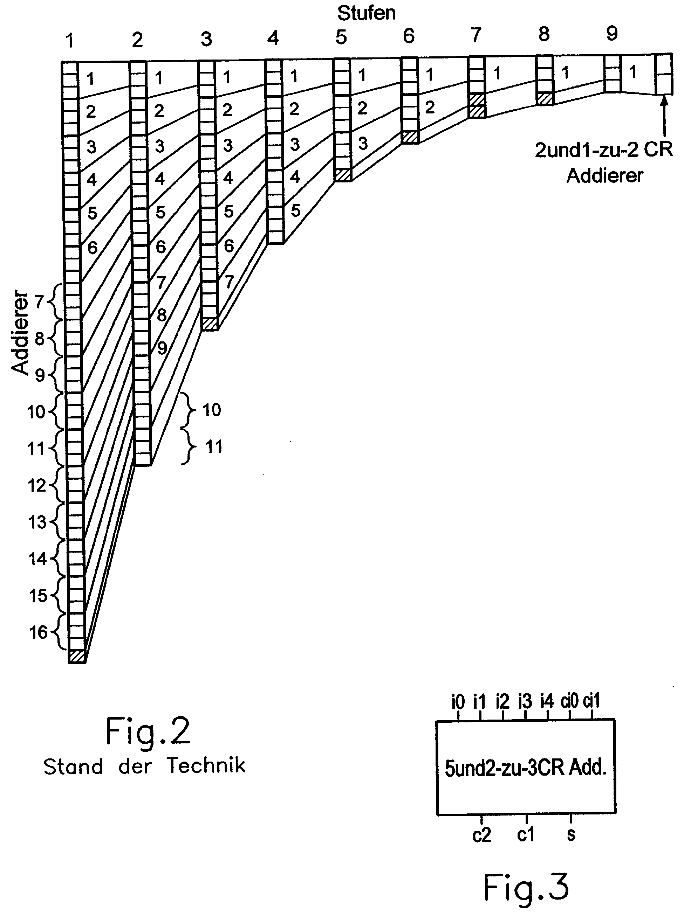

Wenn mehr als 13 Dualzahlen zu addieren sind, werden Bit-Satz-Addierer mit einer entsprechend größeren Anzahl von Eingängen benötigt. Fig. 2 veranschaulicht die Stufenstruktur eines solchen WT-Addierers mit einem 2und1-zu-2 CR Addierer als Endstufe zur Addition von 49 Bits gleicher Wertigkeit. In der Darstellung sind die Eingabe-Bits einer jeden Stufe als Kästchen-Säule dargestellt. Jedes Kästchen entspricht einem Eingabe-Bit. Schraffiert dargestellte Eingabe-Bits werden nicht in der entsprechenden Stufe verarbeitet sondern direkt der nächsten Stufe zugeleitet. Da ein WT-Addierer in jeder Stufe Übertrags-Bits von einem benachbarten (nicht dargestellten) WT-Addierer nächst kleinerer Wertigkeit entgegennimmt und gleichermaßen Übertrags-Bits für einen (nicht dargestellten) WT-Addierer nächst höherer Wertigkeit ausgibtsiehe Fig. 1 - ist Fig. 2 nicht als Schaltbild, sondern allein als Stufenbilanz-Darstellung zu verstehen.

Fig. 2 macht deutlich, daß insgesamt neun WT-Addierer-Stufen und eine CR Endstufe zur Addition der 49 Bits benötigt werden. Die erste Stufe weist 16 3-zu-2 CS Volladdierer auf und die nachfolgenden Stufen enthalten 11, 7, 5, 3, 2, 1, 1 3-zu-2 CS Volladdierer. Die letzte Stufe ist ein 3-zu-2 Volladdierer, der als 2und1-zu-2 Bit CR Addierer ausgeführt ist, das heißt in nicht dargestellter Weise ein Übertrags-Bit von einem 2und1-zu-2 CR-Addierer des (nicht dargestellten) benachbarten Bit-Satz-Addierers mit der nächst niedrigeren Wertigkeit empfängt.

Fig. 3 zeigt eine schematische Darstellung eines erfindungsgemäßen 5und2-zu-3 CR Addierers. Der Addierer weist die Eingänge i0, i1, i2, i3, i4, ci0, ci1 und die Ausgänge s, c1, c2 auf. Die Eingänge i0 bis i4 stellen Eingänge für fünf Eingabe-Bits gleicher Wertigkeit dar, während die Eingänge ci0, ci1 für zwei Übertrags-Bits ebenfalls derselben Wertigkeit vorgesehen sind. Sämtliche Eingänge sind in bezug auf ihre logische Funktionalität äquivalent, d.h. es werden im Ergebnis sieben Bits addiert.

Unterschiede ergeben sich im Zeitverhalten der Eingänge. Die Eingänge i0 bis i4 weisen identisches Zeitverhalten auf, d.h. sind untereinander vertauschbar. Die Eingänge ci0, ci1 sind ebenfalls untereinander vertauschbar und weisen im Vergleich zu den erstgenannten Eingängen i0 bis i4 jedoch eine optimierte (kürzere) Durchlaufzeit auf.

Die Addition von sieben Bits umfaßt einen Wertebereich zwischen Null und sieben. Die drei Ausgänge des 5und2-zu-3 CR Addierers repräsentieren die Summe der an den Eingängen anliegenden Bits in dualkodierter Form. Der Ausgang s für das Summen-Bit weist die gleiche Wertigkeit wie der Satz von Eingabe-Bits i0 bis i4 sowie ci0, ci1 auf. Bei dem Ausgang c1 handelt es sich um einen Übertrags-Ausgang, welcher eine um den Faktor 2 höhere Wertigkeit als der Ausgang s für das Summen-Bit aufweist. Der Ausgang c2 ist ebenfalls ein Ausgang für ein Übertrags-Bit jedoch mit einer nochmals um den Faktor 2 erhöhten Wertigkeit gegenüber dem Ausgang cl. Mit anderen Worten weisen die Ausgänge s, c1 und c2 die Wertigkeiten 2°, 2¹ und 2² bezogen auf die Wertigkeit des Bit-Satzes am Eingang des 5und2-zu-3 CR Addierers auf.

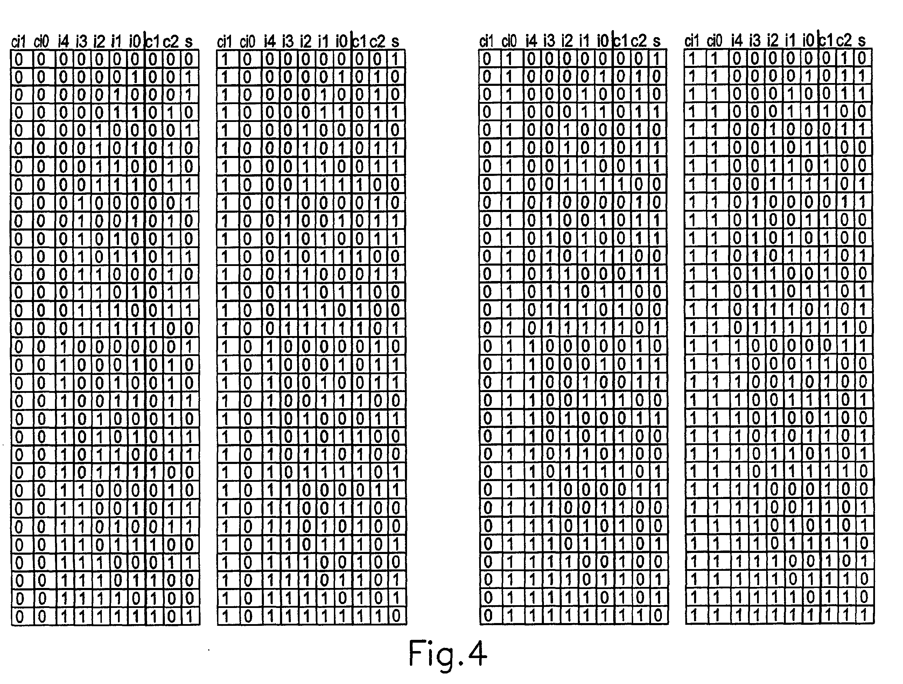

Fig. 4 gibt die Wahrheitstabelle des 5und2-zu-3 CR Addierers wieder. Es wird deutlich, daß der 5und2-zu-3 CR Addierer die Eigenschaft aufweist, daß der Wertebereich der drei AusgangsBits vollständig ausgeschöpft wird. Diese Eigenschaft, die sich unabhängig von der konkreten Gatter-Implementierung des 5und2-zu-3 CR Addierers allein aus dessen Wahrheitstabelle ergibt, begünstigt die aufwandsarme Realisierung des erfindungsgemäßen 5und2-zu-3 CR Addierers.

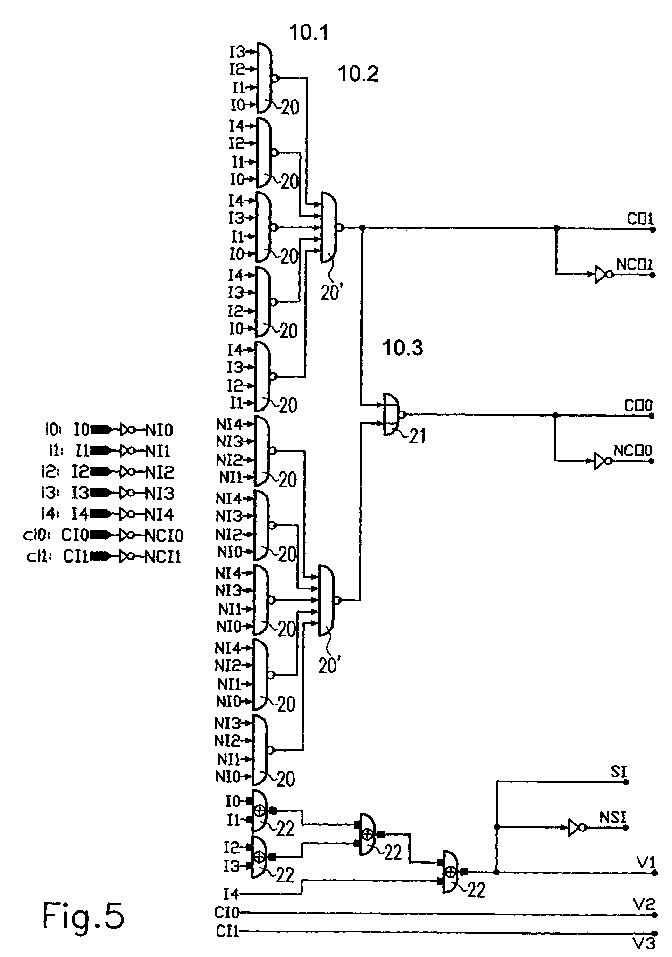

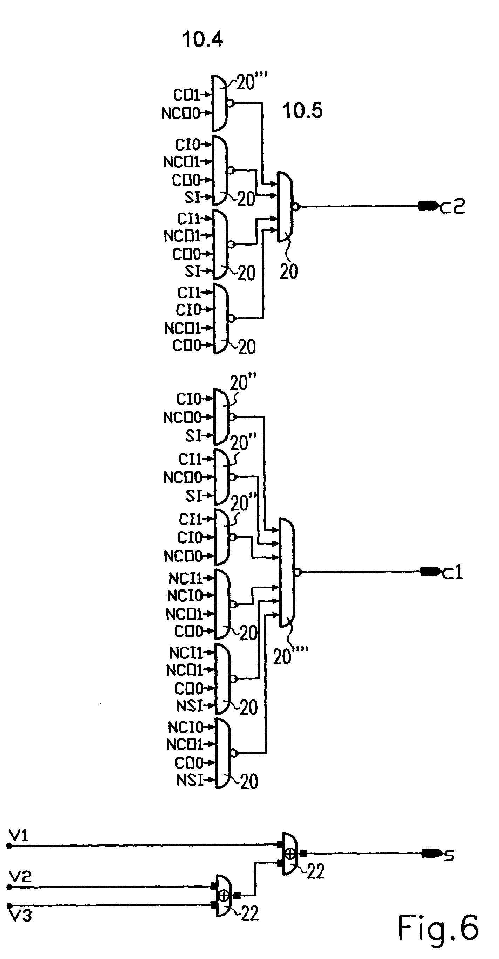

Die Fig. 5 und 6 verdeutlichen in Zusammenschau die Gatterstruktur eines Ausführungsbeispiels eines erfindungsgemäßen 5und2-zu-3 CR Addierers. Die Eingänge i0 bis i4, ci0, ci1 sind hier durch gleichlautende Bezugszeichen mit großen Buchstaben I0 bis I4, CI0 und CI1 angegeben. Dabei bezeichnen NI0 bis NI4, NCI0, NCI1 die invertierten Eingänge I0 bis I4, CI0, CI1. Dies ist im linken Teil der Fig. 5 symbolisch dargestellt. V1, V2 und V3 bezeichnen Verbindungsstellen zwischen den in den Fig. 5 und 6 gezeigten Schaltungsabschnitten.

Eine Zusammenschau der Fig. 5 und 6 macht deutlich, daß die Übertrags-Ausgänge c1 und c2 von der Belegung der Eingänge i0 bis i4 und der Übertrags-Eingänge ci0, ci1 abhängig sind. Zur Steuerung der Übertrags-Ausgänge c1, c2 wird ein 5-stufiger Gatteraufbau eingesetzt. Eine erste Stufe 10.1 besteht aus NAND-Gattern 20 mit jeweils vier Eingängen. Die Ausgänge von jeweils 5 NAND-Gattern 20 werden zusammengefaßt und jeweils einem von insgesamt zwei NAND-Gattern 20' der zweiten Stufe 10.2 des Addierers zugeführt.

Die dritte Stufe 10.3 ist durch ein einzelnes NOR-Gatter 21 mit zwei Eingängen realisiert. Die beiden Eingänge des NOR-Gatters 21 empfangen die Ausgänge der beiden NAND-Gatter 20' der zweiten Stufe 10.2.

Eine vierte Stufe 10.4 ist bezüglich des ersten Übertrags-Ausgangs c1 durch drei NAND-Gatter 20 mit jeweils vier Eingängen und drei NAND-Gattern 20'' mit jeweils drei Eingängen aufgebaut. Bezüglich dem zweiten Übertrags-Ausgang c2 weist die vierte Stufe 10.4 drei NAND-Gatter 20 mit jeweils vier Eingängen und ein NAND-Gatter 20''' mit zwei Eingängen auf.

Die fünfte Stufe 10.5 weist hinsichtlich des niederwertigeren Übertrags-Ausgangs c1 ein NAND-Gatter 20'''' mit sechs Eingängen und hinsichtlich des höherwertigen Übertrags-Ausgangs c2 ein NAND-Gatter 20 mit vier Eingängen auf.

Der Gatteraufbau zur Ansteuerung des Summen-Ausgangs s ist ebenfalls 5-stufig. Die erste Stufe besteht aus zwei XOR-Gattern 22, welche die vier Eingänge i0, i1, i2 und i3 entgegennehmen. Die zweite bis fünfte Stufe besteht jeweils aus einem einzelnen XOR-Gatter 22.

Das Schaltbild macht deutlich, daß die beiden Übertrags-Eingänge ci0 und ci1 erst der vierten Stufe 10.4 des erläuterten Gatteraufbaus zugeleitet werden. Dies gilt sowohl für die Übertrags-Ausgänge c1, c2 als auch für den Summen-Ausgang s. Demzufolge werden die Bits für die Übertragseingänge ci0, ci1 mit einer geringeren Zeitverzögerung als die Eingangs-Bits i0 bis i4 in die Rechnung eingehen. Nach dem Empfang der Bits an den Übertragseingängen ci0, ci1 werden lediglich zwei Gatterlaufzeiten benötigt, um an den Übertrags-Ausgängen c1, c2 die Übertrags-Bits bereitzustellen. (Invertierer werden bei der Zählung der Gatter bzw. Gatterlaufzeiten nicht berücksichtigt, da sie gegebenenfalls auch in Logik-Gattern integriert ausgeführt sein können.)

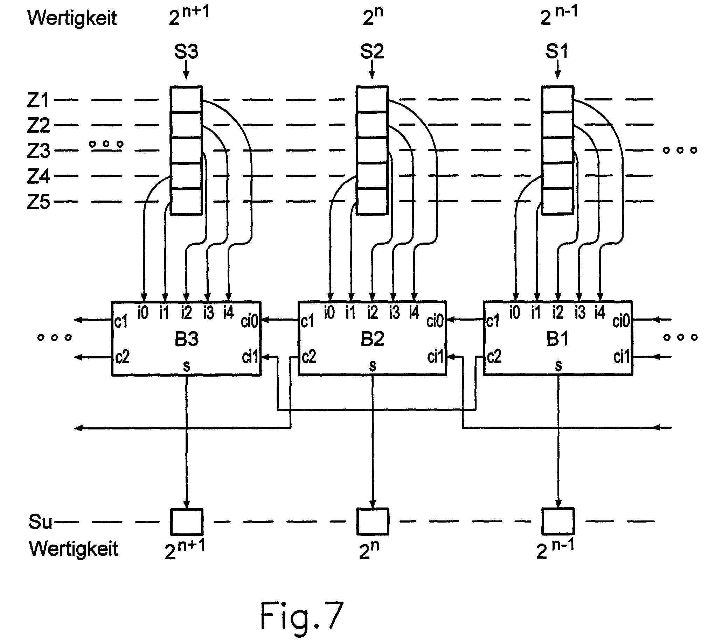

Fig. 7 zeigt einen Schaltbildabschnitt eines übertragsbeschleunigten Addierers, welcher eine maximale Anzahl von fünf binärkodierten Zahlen Z1, Z2, Z3, Z4 und Z5 summieren kann. In der Spalte S1 sind die Bits der n-1-ten Stelle, in der Spalte S2 die Bits der n-ten Stelle und in der Spalte S3 die Bits der n+1-ten Stelle jeweils der Binärzahlen Z1 bis Z5 eingetragen. Dabei ist n eine beliebige ganze Zahl größer oder gleich Eins. Die Bits in Spalte S1 weisen somit die Wertigkeit 2ⁿ⁻¹ auf, die Bits in Spalte S2 weisen die Wertigkeit 2ⁿ auf und die Bits in Spalte S3 besitzen die Wertigkeit 2ⁿ⁺¹.

Der Addierer wird (ausschnittsweise) durch die drei 5und2-zu-3 CR Addierer B1, B2 und B3 dargestellt. Die Eingänge i0 bis i4 des 5und2-zu-3 Addierers B1 nehmen die Bits der Spalte S1 entgegen. In analoger Weise werden die Eingänge i0 bis i4 der 5und2-zu-3 CR Addierer B2 und B3 von den Bits in den Spalten S2 und S3 versorgt.

Die Summen-Bit-Ausgänge s der 5und2-zu-3 CR Addierer B1, B2, B3 sind die n-1-te, n-te und n+1-te Stelle der Binärsumme Su der Zahlen Z1 bis Z5.

Um eine korrekte Behandlung des Übertrags zwischen den 5und2-zu-3 Addierern B1, B2 und B3 zu gewährleisten, sind die Addierer folgendermaßen verschaltet: Der Übertrags-Ausgang c1 niedrigerer Wertigkeit des 5und2-zu-3 CR Addierers B1 ist mit einem Übertrags-Eingang (in Fig. 7 dem Übertrags-Eingang ci0) des 5und2-zu-3 CR Addierers B2 verbunden. Der Übertrags-Ausgang c2 höherer Wertigkeit des 5und2-zu-3 CR Addierers B1 ist mit einem Übertrags-Eingang (in Fig. 7 dem Übertrags-Eingang ci1) des 5und2-zu-3 CR Addierers B3 verbunden. In entsprechender Weise ist der Übertrags-Ausgang c1 niedrigerer Wertigkeit des 5und2-zu-3 CR Addierers B2 mit dem Übertrags-Eingang ci0 des 5und2-zu-3 CR Addierers B3 verbunden, und der Übertrags-Ausgang c2 höherer Wertigkeit des 5und2-zu-3 CR Addierers B2 ist einem nicht dargestellten nächsten 5und2-zu-3 CR Addierer zugeleitet, welcher zur Summation von Bits der Wertigkeit 2ⁿ⁺² vorgesehen ist. Entsprechend diesem Schema ist der Übertrags-Eingang ci1 des 5und2-zu-3 CR Addierers B2 mit dem Übertrags-Ausgang c2 höherer Wertigkeit eines vorangehenden, nicht dargestellten 5und2-zu-3 CR Addierers verbunden, welcher Bits der Wertigkeit 2ⁿ⁻² aufsummiert.

Fig. 7 macht klar, daß ein übertragsbeschleunigter Addierer für maximal 5 Dualzahlen aus einer einzigen Zeile von 5und2-zu-3 CR Addierern aufgebaut sein kann.

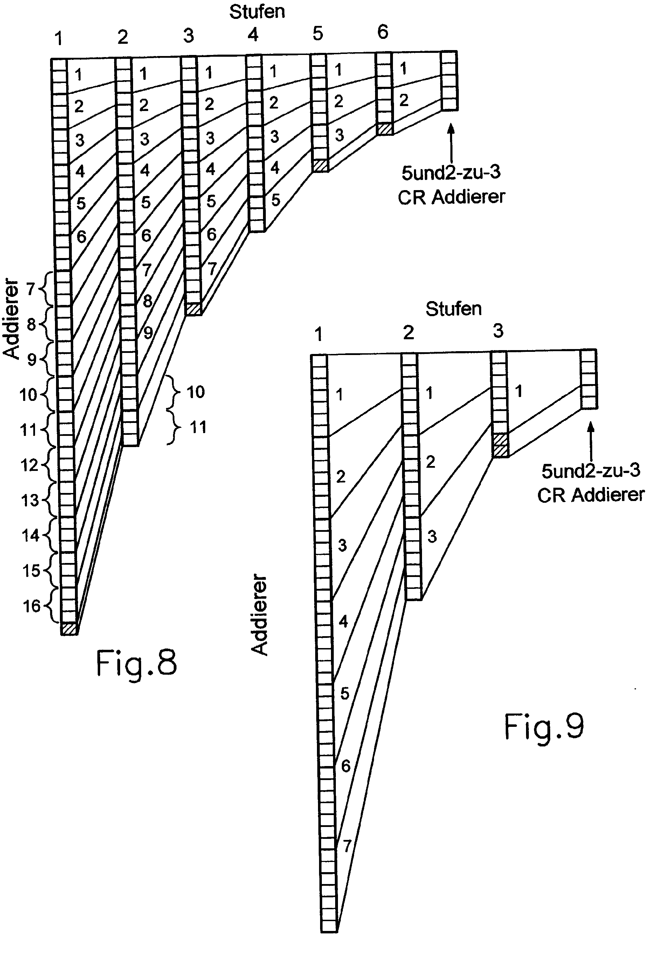

Fig. 8 zeigt ein der Fig. 2 entsprechendes Stufendiagramm eines Bit-Satz-Addierers zum Addieren von 49 Bits gleicher Wertigkeit. Im Gegensatz zu Fig. 2 ist die letze Stufe (d.h. hier die 7. Stufe) jedoch als 5und2-zu-3 CR Addierer realisiert, dem an seinen Übertrags-Eingängen ci0 und ci1 gemäß Fig. 7 zwei Übertrags-Bits von entsprechend aufgebauten Bit-Satz-Addierern für 49-Bit-Sätze der beiden nächst kleineren Wertigkeiten zugeführt werden. Die Stufen 1 bis 6 sind dabei jeweils als 3-zu-2 CS Addierer gemäß herkömmlichem Aufbau (siehe Fig. 1) gebildet. Es wird im Vergleich zu Fig. 2 deutlich, daß allein durch die Verwendung eines 5und2-zu-3 CR Addierers anstelle eines 2und1-zu-2 CR Addierers drei Stufen des Addiererbaums eingespart werden können.

Stufeneinsparungen können auch durch die Verwendung von CS Addierern mit einer größeren Anzahl von Eingängen bewirkt werden. Fig. 9 zeigt ein Stufendiagramm eines Bit-Satz-Addierers, welcher aus kaskadierten 7-zu-3 CS Addierern und einem 5und2-zu-3 CR Addierer als Endstufe aufgebaut ist. Die erste Stufe umfaßt sieben 7-zu-3 CS Addierer und kann damit 49 Bits derselben Wertigkeit entgegennehmen. Für die zweite Stufe werden noch drei 7-zu-3 CS Addierer und für die dritte Stufe ein einziger 7-zu-3 CS Addierer benötigt. Die vierte Stufe wird erfindungsgemäß durch einen 5und2-zu-3 CR Addierer realisiert, welcher an seinen beiden Übertrags-Eingängen ci0, ci1 wiederum zwei externe Überträge entgegennimmt.

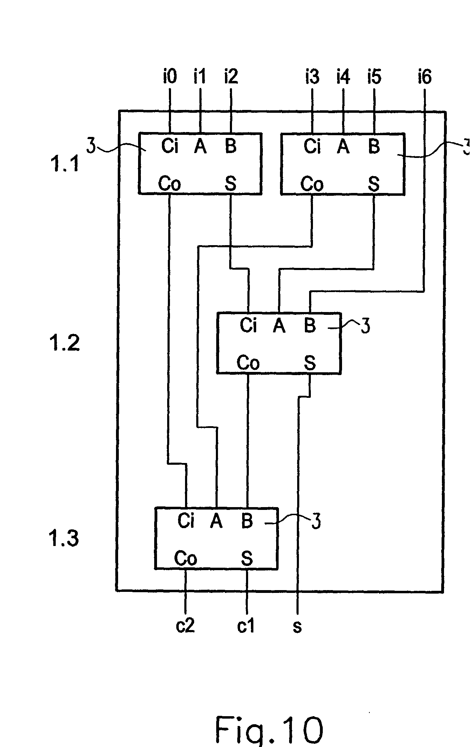

Fig. 10 zeigt in beispielhafter Weise eine Realisierungsmöglichkeit für einen 7-zu-3 CS Addierer. Der 7-zu-3 CS Addierer weist drei Stufen 1.1, 1.2 und 1.3 auf, die aus zwei, einem bzw. einem 3-zu-2 CS Volladdierer gebildet sind. Dieselben oder vergleichbare Teile und Funktionsgruppen wie in Fig. 1 sind mit denselben Bezugszeichen bezeichnet.

Dem 7-zu-3 CS Addierer werden 7 Bits der gleichen Wertigkeit an Eingängen i0, i1, ..., i6 zugeführt. Die ersten sechs Eingänge i0 bis i5 sind mit den 2 x 3 Eingängen der beiden 3-zu-2 CS Addierer 3 der ersten Stufe 1.1 verbunden. Der siebte Eingang i6 ist mit einem Eingang des 3-zu-2 CS Addierers 3 der zweiten Stufe 1.2 verbunden. Die verbleibenden beiden Eingänge A und Ci dieses 3-zu-2 CS Addierers 3 werden jeweils von den Summen-Bit Ausgängen der beiden 3-zu-2 CS Addierer 3 der ersten Stufe 1.1 gespeist.

Der Summen-Bit Ausgang S des 3-zu-2 CS Addierers 3 der zweiten Stufe 1.2 bildet den Summen-Bit Ausgangs des 7-zu-3 CS Addierers. Die drei Übertrags-Bit Ausgänge der beiden 3-zu-2 CS Addierer 3 der ersten Stufe 1.1 und des 3-zu-2 CS Addierers 3 der zweiten Stufe 1.2 werden den drei Eingängen des 3-zu-2 CS Addierers 3 der dritten Stufe 1.3 zugeleitet. Der Summen-Bit Ausgang S des 3-zu-2 CS Addierers 3 der dritten Stufe 1.3 liefert das Bit für den ersten Übertrags-Ausgang c1 und der Übertrags-Bit Ausgang Co dieses 3-zu-2 CS Addierers 3 liefert das Übertrags-Bit c2 nächsthöherer Wertigkeit des betrachteten 7-zu-3 CS Addierers.

Der 7-zu-3 CS Addierer weist die gleiche Wahrheitstafel wie der 5und2-zu-3 CR Addierer auf, jedoch sind sämtliche Eingänge i0 bis i6 auch unter zeitlichen Gesichtspunkten äquivalent (d.h. beliebig vertauschbar).

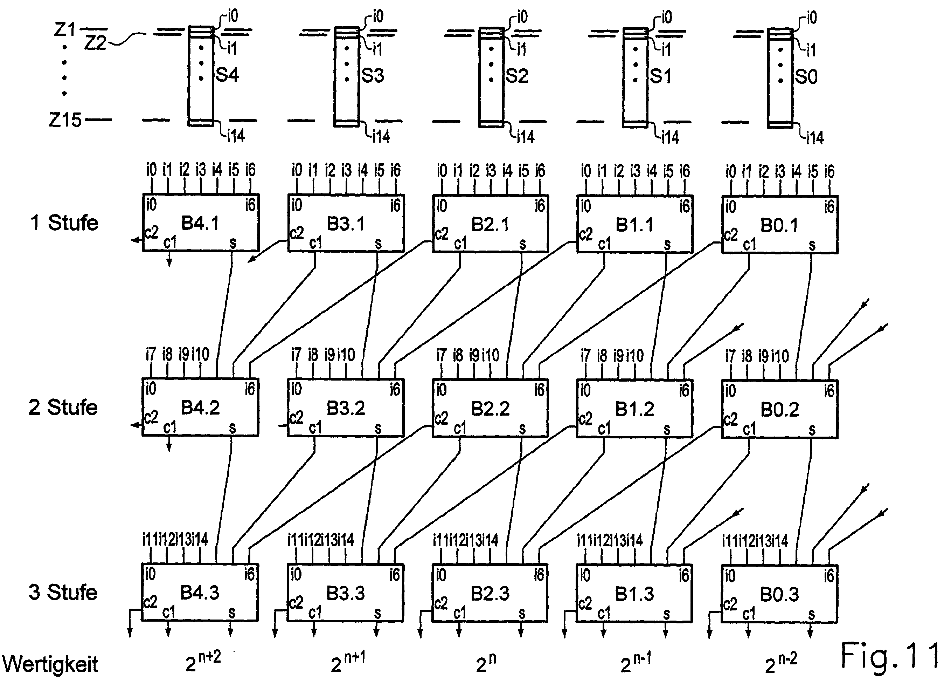

Fig. 11 zeigt einen ausschließlich 7-zu-3 Addierer enthaltenden Ausschnitt eines Schaltungsbeispiels für einen übertragsbeschleunigten Addierer. Der in Fig. 11 dargestellte Addiererausschnitt ermöglicht die Addition von 15 Dualzahlen Z1, Z2, ..., Z15 mit jeweils fünf Dualstellen unterschiedlicher Wertigkeit. Die Bits gleicher Wertigkeit der Dualzahlen Z1, Z2, ..., Z15 sind in den Spalten S0, S1, ..., S4 eingetragen. Jede Spalte S0, S1, ..., S4 enthält also einen Bit-Satz bestehend aus 15 Bits derselben Wertigkeit.

Unterhalb jeder Spalte S0 bis S4 sind die zugehörigen Bit-Satz-Addierer dargestellt. Jeder Bit-Satz-Addierer umfaßt in dem dargestellten Addiererausschnitt jeweils drei 7-zu-3 CS Addierer. Die zur Addition des Bit-Satzes der Spalte S0 vorgesehenen 7-zu-3 CS Addierer sind mit B0.1, B0.2, B0.3 bezeichnet, und in analoger Notation sind die den Spalten S1 bis S4 zugeordneten Addierer mit B1.1, B1.2, B1.3; B2.1, B2.2, B2.3; B3.1, B3.2, B3.3 und B4.1 B4.2, B4.3 bezeichnet.

Von den 15 Bits einer jeden Spalte n, n = 0, 1, ..., 4, werden 7 Bits den Eingängen i0, i1, ..., i6 des ersten CS 7-zu-3 Addierers Bn.1 zugeleitet, weitere vier Bits werden vier Addierer-Eingängen (hier bezeichnet als i7, i8, i9, i10) des 7-zu-3 CS Addierers Bn.2 der zweiten Stufe zugeleitet, und die letzen vier Bits eines Bit-Satzes werden jeweils vier Eingängen (hier mit dem Bezugszeichen i11, i12, i13, i14 bezeichnet) des 7-zu-3 CS Addierers Bn.3 der dritten Stufe zugeführt.

Zur Berücksichtigung der Überträge sind 7-zu-3 CS Addierer benachbarter Stufen diagonal verschaltet. So ist der Übertrags-Ausgang c1 des 7-zu-3 CS Addierers B0.1 (welcher der ersten Stufe angehört) mit einem Eingang des in der zweiten Addiererstufe angeordneten 7-zu-3 CS Addierers B1.2 nächst höherer Wertigkeit verschaltet. Der Übertrags-Ausgang c2 des 7-zu-3 CS Addierers B0.1 ist mit einem Eingang des 7-zu-3 CS Addierers B2.2 verbunden. Der 7-zu-3 CS Addierer B2.2 gehört ebenfalls der zweiten Addiererstufe an, ist jedoch der Spalte S2 zugeordnet, d.h. addiert Bits einer um den Faktor 2 höheren Wertigkeit als der 7-zu-3 Addierer B1.2.

Dieses Prinzip der zweifachen Diagonalverschaltung zwischen benachbarten Stufen unter Berücksichtigung von zwei Überträgen unterschiedlicher Wertigkeit spiegelt sich auch bei der Verschaltung der 7-zu-3 CS Addierer der zweiten und der dritten Stufe wieder. An den Ausgängen s, c1, c2 der 7-zu-3 CS Addierer Bn.3 der dritten Stufe werden jeweils das Summen-Bit s und die beiden Übertrags-Bits c1, c2 unterschiedlicher Wertigkeit ausgegeben.

Sofern der Addierer für die Addition von mehr als 15 Dualzahlen ausgelegt sein soll, kann sich die in Fig. 11 veranschaulichte Stufenstruktur zu höheren Stufen hin fortsetzen. Andernfalls können in abschließenden 3-Bit-Addierern (nicht dargestellt) die jeweiligen Spalten-Summen aus dem Summen-Bit s, dem Übertrags-Bit c1 der nächst niedrigeren Wertigkeit und dem Übertrags-Bit c2 der übernächst niedrigeren Wertigkeit ermittelt und ausgegeben werden.

## Patentansprüche

1. Carry-Ripple Addierer, mit
- 5 ersten Eingängen (i0, i1, i2 i3, i4) zur Entgegennahme von 5 zu summierenden Eingabe-Bits gleicher Wertigkeit w,
- 2 zweiten Eingängen (ci0 ci1) zur Entgegennahme von zwei Übertrags-Bits,
- einem Ausgang (s) für ein Summen-Bit der Wertigkeit w, und
- zwei Ausgängen (c1, c2) für zwei Übertrags-Bits der Wertigkeiten 2w und 4w.

2. Carry-Ripple Addierer nach Anspruch 1,
**dadurch gekennzeichnet,**
- **daß** die maximale Anzahl von Gattern zwischen einem beliebigen ersten Eingang (i0, i1, i2, i3, i4) und einem beliebigen der Ausgänge (c1, c2) für die Übertrags-Bits 5 beträgt.

3. Carry-Ripple Addierer nach Anspruch 1 oder 2,
**dadurch gekennzeichnet,**
- **daß** die maximale Anzahl von Gattern zwischen einem beliebigen zweiten Eingang (ci0, ci1) und einem beliebigen der Ausgänge (c1, c2) für die Übertrags-Bits 2 beträgt.

4. Carry-Ripple Addierer nach Anspruch 1 bis 3,
**dadurch gekennzeichnet,**
- **daß** die maximale Anzahl von Gattern zwischen einem beliebigen zweiten Eingang (ci0 ci1) und dem Ausgang (s) für ein Summen-Bit 2 beträgt.

5. Übertragsbeschleunigter Addierer zum Summieren einer Mehrzahl von Bit-Sätzen, wobei die in einem Bit-Satz (S0, ..., S4) enthaltenen Bits dieselbe Wertigkeit und Bits unterschiedlicher Bit-Sätze (S0, ..., S4) unterschiedliche Wertigkeiten aufweisen, und wobei jedem Bit-Satz ein Bit-Satz-Addierer zugeordnet ist, welcher unter Berücksichtigung von bei der Summation von Bit-Sätzen niedrigerer Wertigkeit gewonnenen Überträgen ein Bit der Wertigkeit des jeweiligen Bit-Satzes berechnet,
**dadurch gekennzeichnet,**
**daß** zumindest einer der Bit-Satz-Addierer einen ausgangsseitig angeordneten Carry-Ripple Addierer mit
- 5 ersten Eingänge (i0 i1, i2, i3, i4) zur Entgegennahme von 5 zu summierenden Eingabe-Bits gleicher Wertigkeit w,
- 2 zweiten Eingängen (ci0 ci1) zur Entgegennahme von zwei Übertrags-Bits,
- einem Ausgang (s) für ein Summen-Bit der Wertigkeit w, und
- zwei Ausgänge (c1, c2) für zwei Übertrags-Bits der Wertigkeiten 2w und 4w enthält.

6. Übertragsbeschleunigter Addierer nach Anspruch 5,
**dadurch gekennzeichnet,**
- **daß** sämtliche Bit-Sätze maximal 5 Bits enthalten,
- **daß** sämtliche Bit-Satz-Addierer jeweils einstufig in Form von 5und2-zu-3 Carry-Ripple Addierern (B1, B2, B3) realisiert sind, und
- **daß** der Ausgang (c1) für das niederwertigere der zwei Übertrags-Bits einem zweiten Eingang des 5und2-zu-3 Carry-Ripple Addierers für die nächst höherer Wertigkeit zugeführt ist, und der Ausgang (c2) für das höherwertigere der zwei Übertrags-Bits einem zweiten Eingang des 5und2-zu-3 Carry-Ripple-Addierers für die übernächst höhere Wertigkeit zugeführt ist.

7. Übertragsbeschleunigter Addierer nach Anspruch 5 oder 6,
**dadurch gekennzeichnet,**
- **daß** zumindest einem Bit-Satz ein mehrstufiger Bit-Satz-Addierer zugeordnet ist, und
- **daß** die ausgangseitige Stufe dieses Bit-Satz-Addierers ein 5und2-zu-3 Carry-Ripple Addierer ist.

8. Übertragsbeschleunigter Addierer nach Anspruch 7,
**dadurch gekennzeichnet,**
- **daß** bis auf die ausgangsseitige Stufe die Stufen des Bit-Satz-Addieres aus mehreren parallel angeordneten 3-zu-2 Carry-Save Volladdierern aufgebaut sind.

9. Übertragsbeschleunigter Addierer nach Anspruch 8,
**dadurch gekennzeichnet,**
- **daß** bis auf die ausgangsseitige Stufe die Stufen des Bit-Satz-Addieres aus Carry-Save Addierern mit mehreren Ausgängen für Übertrags-Bits, insbesondere 7-zu-3 Carry-Save Addierern (B0.1-3, B1.1-3, B2.1-3), aufgebaut sind.
